# EUROPÄISCHE PATENTSCHRIFT

(11) **EP 1 978 274 B1**
(45) Veröffentlichungstag und Bekanntmachung des Hinweises auf die Patenterteilung: **20.03.2019**
(21) Anmeldenummer: 08000920.2
(22) Anmeldetag: 18.01.2008
(51) Int. Cl.: F16F 1/38

(54) **Lager für eine Radaufhängung eines Kraftfahrzeugs**
Bearing for wheel suspension in a motor vehicle
Palier de suspension de roue d'un véhicule automobile

(30) Priorität: 04.04.2007 DE 102007016226
(43) Veröffentlichungstag der Anmeldung: 08.10.2008
(73) Patentinhaber: AUDI AG, 85045 Ingolstadt (DE)
(72) Erfinder: Leitner, Wilfried, 85072 Eichstätt (DE); Lamers, Stephan, 93336 Altmannstein (DE)
(74) Vertreter: Bauer, Dominik Michael

(56) Entgegenhaltungen:
- EP-A- 0 487 891
- EP-A- 0 524 843
- EP-A- 1 736 681
- DE-C1- 4 215 627
- US-A- 2 414 743
- US-A- 3 147 964

## Beschreibung

Die Erfindung betrifft ein Lager für eine Radaufhängung eines Kraftfahrzeuges gemäß der im Oberbegriff des Anspruches 1 angegebenen Art.

Ein Gummi-Metall-Lager für eine Radaufhängung eines Kraftfahrzeuges ist in der DE 196 13 212 C2 beschrieben. Das offenbarte Gummi-Metall-Lager weist im Wesentlichen drei beim Einbau des Lagers an einen Lenker der Radaufhängung zu montierende Lagerelemente, nämlich ein erstes und ein zweites, jeweils ein Gummielement aufweisendes, axialwirksames Lagerelement und ein zwischen den beiden axialwirksamen Lagerelementen angeordnetes, ein weiteres Gummielement aufweisendes, radialwirksames Lagerelement auf. Das Gummi-Metall-Lager zeichnet sich insbesondere durch die Vorspannung der jeweiligen Gummielemente aus, sodass eine ausreichende Aufnahme der in Fahrtrichtung und quer zur Fahrtrichtung auftretenden Belastungen durch die in den einzelnen Lagerelementen angeordneten Gummielemente gewährleistet ist. Während das Gummielement des radialwirksamen Lagerelements von einem, die erforderliche Vorspannung erzeugenden Gehäusemantel umfasst ist, können die Gummielemente der axialwirksamen Lagerelemente erst beim Einbau des Lagers an einen Lenker der Radaufhängung mittels einer Spannschraube der Radaufhängung vorgespannt werden.

Als nachteilig erweist sich bei dem offenbarten Gummi-Metall-Lager der Umstand, dass das Gummi-Metall-Lager nur geteilt an einen Lenker der Radaufhängung montierbar ist und dass die Vorspannung der Gummielemente der axialwirksamen Lagerelemente erst bei der Montage des Lagers an einen Lenker der Radaufhängung aufwendig mittels einer Spannschraube eingestellt werden kann.

Ein Lager mit den Merkmalen des Oberbegriffs des Anspruchs 1 ist aus DE 42 15 627 C1, Figur 6, bekannt.

Der Erfindung liegt die Aufgabe zu Grunde, ein Lager für eine Radaufhängung eines Kraftfahrzeuges gemäß der im Oberbegriff des Anspruches 1 angegebenen Art unter Vermeidung der genannten Nachteile derart weiter zu bilden, dass das Lager einen kompakten Lageraufbau aufweist und ein vereinfachter Einbau des Lagers gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung umfasst das Lager für eine Radaufhängung eines Kraftfahrzeuges ein Radiallager mit einem Lagerkern und einen dem Lagerkern umgebenden Elastomerkörper, ein erstes Axiallager mit einem ersten inneren Lagerelement und einem ersten äußeren Lagerelement und einem zwischen dem ersten inneren und dem ersten äußeren Lagerelement angeordneten ersten Elastomerkörper, sowie ein zweites Axiallager mit einem zweiten inneren Lagerelement und einem zweiten äußeren Lagerelement und einem zwischen dem zweiten inneren und dem zweiten äußeren Lagerelement angeordneten zweiten Elastomerkörper. Erfindungsgemäß sind das Radiallager und die beiden Axiallager fest vormontiert, wobei in axiale Richtung betrachtet jeweils das äußere Lagerelement der beiden Axiallager am Lagerkern des Radiallagers festgelegt ist und die jeweiligen inneren Lagerelemente der beiden Axiallager miteinander in Wirkverbindung stehend, axial festgelegt sind und in radiale Richtung betrachtet das Radiallager durch die in Wirkverbindung miteinander stehenden Lagerelemente der beiden Axiallager festgelegt ist. Hierbei sind der Lagerkern des Radiallagers und die Lagerelemente der beiden Axiallager derart geometrisch zueinander angeordnet bzw. vormontiert, dass zumindest die Elastomerkörper der Axiallager eine definierte Vorspannung aufweisen.

Durch die erfindungsgemäße Vormontage der einzelnen Lagerbauteile und die durch bzw. während der Vormontage erzeugte definierte Vorspannung der Elastomerkörper der Axiallager ist in vorteilhafter Weise ein Lager mit einem kompakten Montagemaß für die Endmontage zur Verfügung gestellt, das einstückig an einem Lenker der Radaufhängung montierbar ist. Auf Grund der bereits während der Vormontage erzeugten Vorspannung der Elastomerkörper der Axiallager ist zudem in vorteilhafter Weise ein aufwendiges Vorspannen der Elastomerkörper während des Einbaus des Lagers über zusätzliche Bauteile, z.B. mittels einer Spannschraube, nunmehr nicht mehr erforderlich. Als weiterer Vorteil ist anzufügen, dass das erfindungsgemäße Lager infolge der einfachen Teilegeometrie und der geringen Anzahl von Einzelteilen über einen simplen, homogenen Aufbau verfügt.

Gemäß der beanspruchten Ausführungsform des erfindungsgemäßen Lagers sind der Lagerkern des Radiallagers und die Lagerelemente der beiden Axiallager derart geometrisch zueinander angeordnet, dass auch der Elastomerkörper des Radiallagers vorgespannt ist, d.h. das bei der Vormontage des Lagers auch der Elastomerkörper des Radiallagers definiert vorgespannt wird. Vorzugsweise ist das Radiallager von einer den Lagerkern und den Elastomerkörper umgebenden Außenschale umfasst. Durch das Vorsehen einer den Lagerkern und den Elastomerkörper umfassenden bzw. umgebenden Außenschale ist auf eine einfache Art und Weise bereits vor der Vormontage der einzelnen Lagerbauteile ein definiertes Vorspannen des Elastomerkörpers des Radiallagers ermöglicht.

Gemäß einer ersten Ausführungsform des erfindungsgemäßen Lagers sind das erste und das zweite äußere Lagerelement des Axiallagers auf dem Lagerkern des Radiallagers axial festgelegt, während das erste und zweite innere Lagerelement der Axiallager in axiale Richtung betrachtet, nebeneinanderliegend über eine gemeinsame Berührungsebene miteinander in Wirkverbindung stehend, angeordnet sind. Die Festlegung des Radiallagers erfolgt vorliegend durch die beiden über eine gemeinsame Berührungsebene miteinander in Wirkverbindung stehenden inneren Lagerelemente der Axiallager.

Eine zweite, ähnliche Ausführungsform des erfindungsgemäßen Lagers erfordert die Ausbildung des Radiallagers mit einer, den Lagerkern und den Elastomerkörper umgebenden Außenschale. Nach dieser zweiten Ausführungsform der Erfindung sind wiederum das erste und zweite äußere Lagerelement der Axiallager auf dem Lagerkern des Radiallagers axial festgelegt, während das erste und zweite innere Lagerelement der Axiallager in axiale Richtung betrachtet, einen Zwischenspalt aufweisend, nebeneinanderliegend angeordnet sind. Die beiden inneren Lagerelemente der Axiallager weisen dabei jeweils einen Positionieranschlag zur axialen Festlegung der Außenschale des Radiallagers auf, so dass die beiden inneren Lagerelemente der Axiallager über die Außenschale des Radiallagers und die Positionieranschläge in axialer Richtung miteinander in Wirkverbindung stehen und somit das Radiallager durch die Außenschale sowie das erste innere und zweite innere Lagerelement radial festgelegt ist.

Eine dritte nicht beanspruchte Ausführungsform sieht eine "umgekehrte" Anordnung der inneren und äußeren Lagerelemente der beiden Axiallager vor. Gemäß dieser dritten Ausführungsform des erfindungsgemäßen Lagers sind das erste und zweite innere Lagerelement der Axiallager auf dem Lagerkern des Radiallagers axial festgelegt, während das erste und zweite äußere Lagerelement der Axiallager in axiale Richtung betrachtet über eine Hülse miteinander in Wirkverbindung stehen und die Festlegung des Radiallagers in radiale Richtung durch die Hülse realisiert ist.

Um einen kompakten, eine geringe Anzahl von Einzelteilen aufweisenden Lageraufbau des erfindungsgemäßen Lagers nach der dritten Ausführungsform zu ermöglichen, sind in vorteilhafter Weise die Hülse oder das erste und zweite äußere Lagerelement der Axiallager einteilig ausgebildet.

Die Festlegung der äußeren bzw. inneren Lagerelemente der beiden Axiallager am Lagerkern des Radiallagers kann dabei kraft- und/oder form- und/oder stoffschlüssig ausgebildet sein.

Gemäß einer weiteren vorteilhaften Ausgestaltung der Erfindung ist zwischen dem Lagerkern und dem Elastomerkörper des Radiallagers eine Gleitfläche ausgebildet. Die Ausbildung einer Gleitfläche zwischen dem Lagerkern und dem Elastomerkörper erweist sich als vorteilhaft, da hierdurch die Torsionssteifigkeit des Lagers reduzierbar ist.

Zur Reduzierung der kardanischen Steifigkeit des erfindungsgemäßen Lagers ist gemäß einer weiteren Ausgestaltung vorgesehen, dass der Elastomerkörper des Radiallagers und/oder der erste und/oder zweite Elastomerkörper der Axiallager konisch oder rund ausgebildete Funktionsflächen aufweisen.

Vorzugsweise sind in den Elastomerkörper des Radiallagers und/oder in den ersten und/oder den zweiten Elastomerkörper der Axiallager Einlegeteile mit einer im Verhältnis zu den Elastomerkörpern größeren Steifigkeit eingebracht. Diese Einlegeteile sind insbesondere in Form von Zwischenhülsen/-scheiben ausgebildet. Das Einbringen der Einlegeteilen in die Elastomerkörper hat den Effekt, dass hierdurch auf eine einfache Art und Weise eine Kennlinienoptimierung des Lagers ermöglicht ist. Als Werkstoff für die Einlegeteile kommen beispielsweise Metall, Kunststoff, Keramik oder Glas in Frage.

Denkbar ist auch, dass zur Kennlinienoptimierung der Elastomerkörper des Radiallagers und/oder der erste und/oder der zweite Elastomerkörper der Axiallager partieller Aussparungen, z. B. in Form von sogenannten Nieren oder Taschen, aufweisen.

Vorzugsweise kann der Elastomerkörper des Radiallagers einen oder mehrere in axiale Richtung ausgerichtete Schlitze aufweisen. Der Schlitz bzw. der Schlitze, der/die während der Montage mehr oder weniger geschlossen wird/sind, hat den Effekt, dass der Elastomerkörper sehr weit vorgespannt werden kann. D.h. durch die geschlitzte Ausbildung des Elastomerkörpers des Radiallagers ist ein weiteres Mittel zur Kennlinienoptimierung des Lagers zur Verfügung gestellt.

Gemäß einer weiteren Ausführungsform der Erfindung ist der Elastomerkörper des Radiallagers an den Lagerkern anvulkanisiert. Hierdurch ist eine vereinfachte Vormontage des Radiallagers gewährleistet.

Gemäß einer anderen Ausführungsform der Erfindung ist der Elastomerkörper des Radiallagers auf den Lagerkern aufgeschoben. Dies hat den Effekt, dass eine innere Vorspannung des Radiallagers ermöglicht ist.

Eine weitere Ausführungsform der Erfindung sieht vor, dass der Elastomerkörper des Radiallagers auf eine auf den Lagerkern des Radiallagers aufschieb/-pressbare Hülse aufvulkanisiert ist. Das Aufvulkanisieren des Elastomerkörpers auf eine auf den Lagerkern aufschieb- bzw. aufpressbare Hülse erweist insbesondere im Hinblick auf eine vereinfachte Fertigung Vorteile.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand der in der Zeichnung dargestellten Ausführungsbeispiele näher beschrieben.

In der Beschreibung, in den Patentansprüchen, in der Zusammenfassung und in der Zeichnung werden die in der unten aufgeführten Liste der Bezugszeichen verwendeten Begriffe und zugeordnete Bezugszeichen verwendet.

In der Zeichnung bedeuten:
- Fig. 1: eine vereinfachte Schnittdarstellung einer ersten Ausführungsform des erfindungsgemäßen Lagers;
- Fig. 2: das Lager aus Fig. 1 in einer Ansicht schräg von vorne;
- Fig. 3: eine Schnittdarstellung einer zweiten Ausführungsform des erfindungsgemäßen Lagers;
- Fig. 4: das Lager aus Fig. 3 in einer Ansicht schräg von vorne;
- Fig. 5: eine Schnittdarstellung einer dritten, nicht beanspruchten Ausführungsform eines Lagers;
- Fig. 6: das Lager aus Fig. 5 in einer Ansicht schräg von vorne;
- Fig. 7: eine Prinzipskizze des Lagers aus Fig. 5 mit einer einteiligen Ausbildung der Hülse und eines äußeren axialen Lagerelementes;
- Fig. 8: eine weitere Prinzipskizze des Lagers aus Fig. 7 mit einer zwischen Lagerkern und Elastomerkörper des Radiallagers ausgebildeten Gleitfläche, und
- Fig. 9: eine weitere Prinzipskizze des Lagers aus Fig. 7, bei der die Funktionsflächen der Elastomerkörper konisch oder rund angeordnet sind.

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich oder sinnvoll ist.

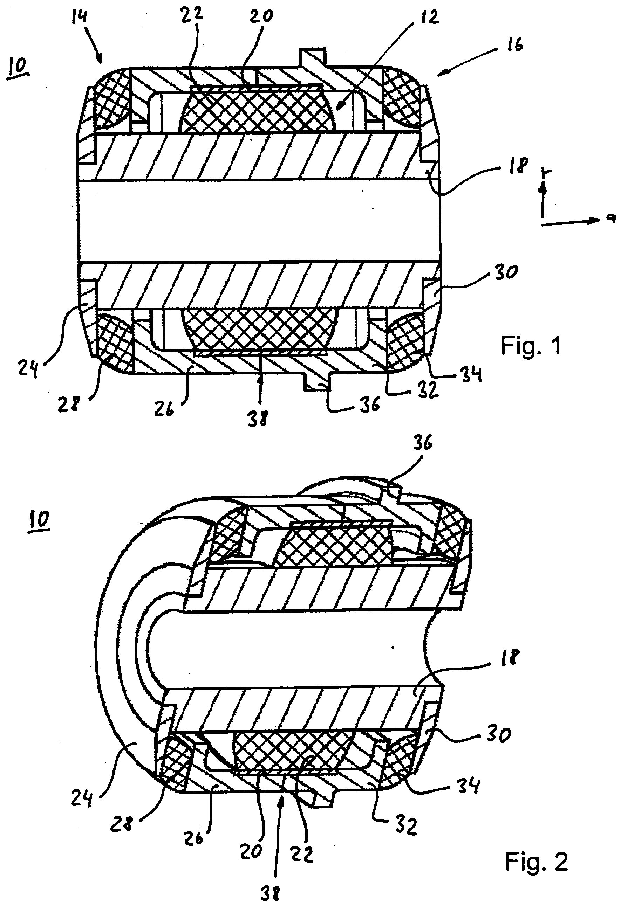

Das in Fig. 1 und Fig. 2 mehr oder minder schematisch dargestellte und insgesamt mit der Bezugsziffer 10 bezeichnete Lager für eine Radaufhängung eines Kraftfahrzeuges umfasst im Wesentlichen ein Radiallager 12 sowie ein erstes Axiallager 14 und ein zweites Axiallager 16.

Das Radiallager 12 weist seinerseits ein Lagerkern 18, eine den Lagerkern 18 umgebende Außenschale 20, sowie einen zwischen der Außenschale 20 und dem Lagerkern 18 angeordneten Elastomerkörper 22 auf.

Das erste Axiallager 14 umfasst ein erstes äußeres Lagerelement 24 und ein erstes inneres Lagerelement 26. Zwischen dem ersten inneren Lagerelement 24 und dem ersten äußeren Lagerelement 26 ist ein erster Elastomerkörper 28 angeordnet.

Das zweite Axiallager 16 weist einen spiegelsymmetrischen Aufbau auf und umfasst dementsprechend ein zweites äußeres Lagerelement 30 sowie ein zweites inneres Lagerelement 32 und einen zwischen dem zweiten äußeren Lagerelement 30 und dem zweiten inneren Lagerelement 32 angeordneten zweiten Elastomerkörper 34.

Um eine einfach Positionierung des Lagers 10 bei der Endmontage an einen Lenker eines Kraftfahrzeugs zu gewährleisten, weist das innere Lagerelement 32 des zweites Axiallagers 16 zudem einen Anschlag 36 auf.

Die Lagerbauteile Radiallager 12 und erstes und zweites Axiallager 14, 16 sind fest vormontiert, wobei die jeweils äußeren Lagerelemente 24, 30 der beiden Axiallager 14, 16 auf dem Lagerkern 18 des Radiallagers 12 axial festgelegt sind und die beiden inneren Lagerelemente 26, 32 der beiden Axiallager 14, 16 in axiale Richtung a betrachtet nebeneinander liegend, eine gemeinsame Berührungsebene 38 aufweisend, angeordnet sind. D.h. die beiden inneren Lagerelemente 26, 32 der beiden Axiallager 14, 16 stehen in axiale Richtung a betrachtet über die gemeinsame Berührungsebene 38 miteinander in Wirkverbindung und sind durch die Berührungsebene 38 jeweils axial fixiert.

Die Festlegung der äußeren Lagerelemente 24, 30 der Axiallager 14, 16 auf dem Lagerkern 18 des Radiallagers 12 ist vorliegend form- und stoffschlüssig ausgebildet.

Die über die Berührungsebene 38 miteinander in Wirkverbindung stehenden inneren Lagerelemente 26, 32 der beiden Axiallager 14, 16 umfassen bzw. umschließen in radiale Richtung r betrachtet das Radiallager 12, d.h., die den Elastomerkörper 22 des Radiallagers 12 umgebende Außenschale 20 ist durch die inneren Lagerelemente 26, 32 der Axiallager 14, 16 radial festgelegt.

Die vormontierten Lagerbauteile des Lager 10, nämlich das Radiallager 12 und die beiden Axiallager 14, 16 sind dabei derart geometrisch zueinander angeordnet, dass die Elastomerkörper 22, 28, 34 der Lagerbauteile 12, 14, 16 vorgespannt sind, d.h. die Vorspannung der Elastomerkörper 22, 28, 34 erfolgt vorliegend bei der Vormontage des Lagers 10.

Bei der nachfolgenden Endmontage des Lagers 10 z.B. Einpressen in ein Achsbauteil und Verschraubung mit einem weiteren Achsbauteil, ist nur noch eine Verformung im Rahmen der Elastizität der "hochsteifen" Lagerbauteile zu erwarten und zu berücksichtigen. Hierdurch ist ein kompaktes Montagemaß für die Endmontage sichergestellt.

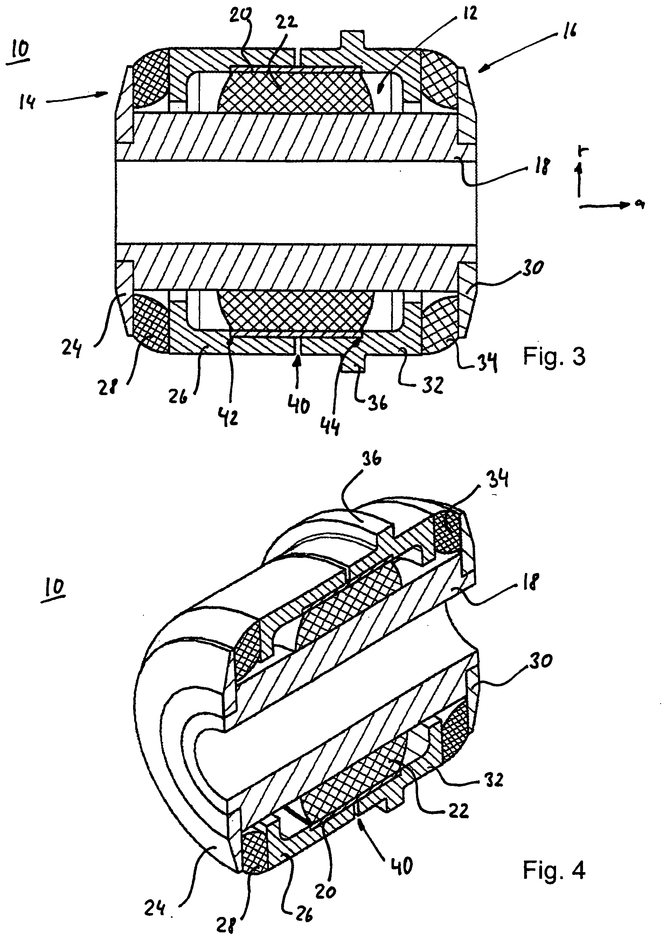

Die in den Fig. 3 und 4 dargestellte zweite Ausführungsform der vorliegenden Erfindung entspricht im Wesentlichen der in Fig. 1 und 2 dargestellten Ausführungsform.

Im Gegensatz zu der bereits beschriebenen ersten Ausführungsform sind die beiden inneren Lagerelemente 26, 32 der beiden Axiallager 14, 16 nebeneinander liegend, einen Spalt 40 aufweisend zueinander angeordnet. Zur Herstellung der in axiale Richtung a notwendigen Wirkverbindung zwischen den inneren Lagerelementen 26, 32 der beiden Axiallager 14, 16 weisen die beiden inneren Lagerelemente 26, 32 jeweils eine in axiale Richtung a betrachtet gegenüberliegend angeordnete Vertiefung mit Positionieranschläge 42, 44 zur passgenauen Aufnahme der Außenschale 20 des Radiallagers 12 auf.

Die Festlegung des Radiallager 12 in radiale Richtung r ist somit durch die passgenaue Aufnahme der Außenschale 20 in die Vertiefung der inneren Lagerelemente 26, 32 der beiden Axiallager 14, 16 realisiert.

Entsprechend dem bereits oben dargelegten, erfolgt eine definierte Vorspannung der Elastomerkörper 20, 28, 34 wiederum bei der Vormontage des Lagers 10 durch die geometrische Anordnung der einzelnen Lagerbauteile 12, 14, 16 zueinander.

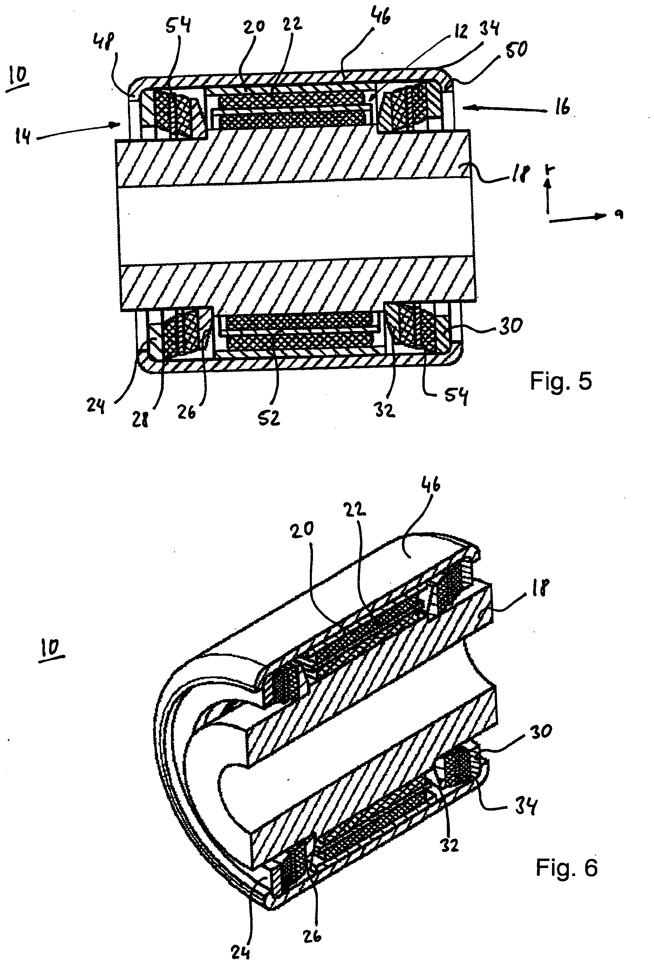

Bei der in Fig. 5 und 6 dargestellten dritten Ausführungsform des Lagers 10 sind im Gegensatz zu den bisherigen Ausführungsformen das erste und zweite innere Lagerelement 26, 32 der beiden Axiallager 14, 16 auf dem Lagerkern 18 des Radiallagers 12 axial festgelegt.

Die Festlegung der inneren Lagerelemente 26, 32 der beiden Axiallager 14, 16 auf dem Lagerkern 18 des Radiallagers 12 ist vorliegend wieder form- und stoffschlüssig ausgebildet.

Die beiden äußeren Lagerelemente 24, 30 der beiden Axiallager 14, 16 stehen über eine Hülse 46 miteinander in Wirkverbindung. D.h. die Hülse 46 umfasst bzw. umschließt das Radiallager 16 bzw. die Außenschale 20 des Radiallagers 12, sodass durch die Hülse 46 das Radiallager 12 in radiale Richtung r festgelegt ist.

Um eine axiale Fixierung der beiden äußeren Lagerelemente 24, 30 der beiden Axiallager 14, 16 durch die Hülse 46 zu gewährleisten, weist die Hülse 46 jeweils eine, dem jeweiligen Lageelement 24, 30 der beiden Axiallager 14, 16 zugeordnete, das entsprechende Lagerelement 24, 30 bereichsweise umfassende Stützkante 48, 50.

Zudem ist bei der in Fig. 5 und 6 dargestellten Ausführungsform des Lagers 10 in den Elastomerkörper 22 des Radiallagers 12 ein Einlegeteil 52 in Form einer Zwischenhülse und in die ersten und zweiten Elastomerkörper 28, 34 der beiden Axiallager 14, 16 jeweils ein Einlegeteil in Form einer Zwischenscheibe 54 eingebracht. Hierdurch ist eine kennlinienoptimierte Ausbildung des Lagers 10 ermöglicht.

Wie bei den bereits beschriebenen ersten und zweiten Ausführungsformen erfolgt auch bei dieser dritten Ausführungsform des Lagers 10 die definierte Vorspannung der Elastomerkörper 22, 28, 34 wiederum bei der Vormontage des Lagers 10 durch eine entsprechend gewählte geometrische Anordnung der einzelnen Lagerbauteile 12, 14, 16 sowie der Hülse 46 zueinander.

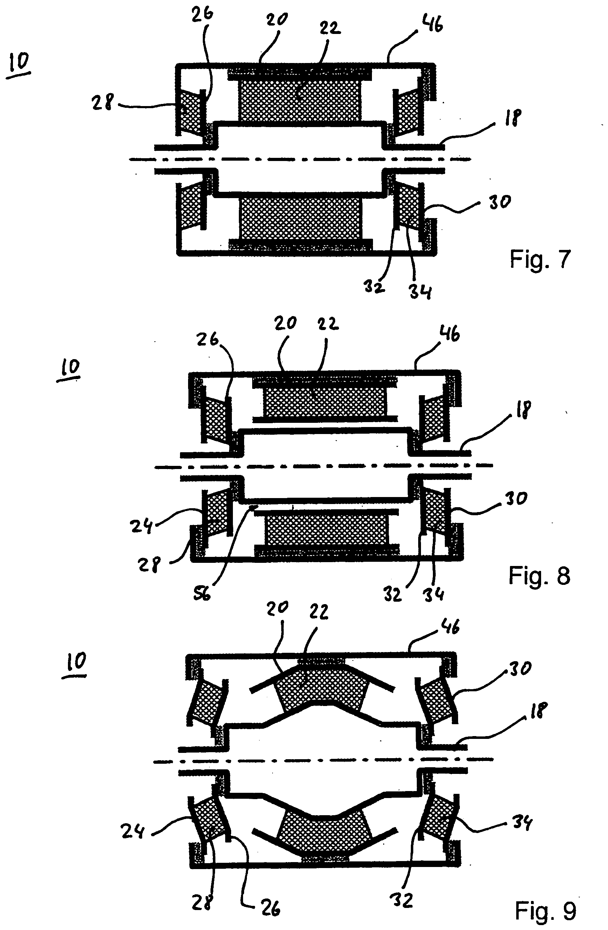

Das in Fig. 7 mittels einer Prinzipskizze dargestellte weiterführende Ausbildungsbeispiels des Lagers 10 zeichnet sich dadurch aus, dass die Hülse 46 und das äußeren Lagerelemente 24 des Axiallagers 14 einteilig ausgebildet sind.

Ein weiteres mögliches Ausbildungsbeispiel des Lagers 10 ist in Fig. 8 dargestellt. Hierbei ist zwischen dem Lagerkern 18 des Radiallagers 12 und dem Elastomerkörper 22 des Radiallagers 12 eine Gleitfläche 56 ausgebildet. Durch das Vorsehen der Gleitfläche 56 ist in vorteilhafter Weise eine Reduzierung der Torsionssteifigkeit der Lagers 10 realisierbar.

Bei dem in Fig. 9 dargestellten Ausführungsbeispiel sind der Elastomerkörper 22 des Radiallagers 12 sowie die Elastomerkörper 28, 34 der beiden Axiallager 14, 16 jeweils mit konisch ausgebildeten Funktionsflächen ausgebildet. Die konische oder auch runde Ausbildung der Funktionsflächen stellt ein wirksames Mittel zur Kennlinienoptimierung der Lagers 10 dar.

### BEZUGSZEICHENLISTE

- 10: Lager
- 12: Radiallager
- 14: erstes Axiallager
- 16: zweites Axiallager
- 18: Lagerkern
- 20: Außenschale
- 22: Elastomerkörper des Radiallagers
- 24: erstes äußeres Lagerelement
- 26: erstes inneres Lagerelement
- 28: erster Elastomerkörper
- 30: zweites äußeres Lagerelement
- 32: zweites inneres Lagerelement
- 34: zweiter Elastomerkörper
- 36: Anschlag
- 38: Berührungsebene
- 40: Spalt
- 42: Positionieranschlag
- 44: Positionieranschlag
- 46: Hülse
- 48: Stützkante
- 50: Stützkante
- 52: Einlegeteil
- 54: Einlegeteil
- 56: Gleitfläche

- a: axiale Richtung
- r: radiale Richtung

## Patentansprüche

1. Lager (10) für eine Radaufhängung eines Kraftfahrzeugs, umfassend
- ein Radiallager (12) mit einem Lagerkern (18) und einen den Lagerkern (18) umgebenden Elastomerkörper (22),
- ein erstes Axiallager (14) mit einem ersten inneren Lagerelement (26) und einem ersten äußeren Lagerelement (24) und einem zwischen dem ersten inneren und dem ersten äußeren Lagerelement (26, 24) angeordneten ersten Elastomerkörper (28), sowie
- ein zweites Axiallager (16) mit einem zweiten inneren Lagerelement (32) und einem zweiten äußeren Lagerelement (30) und einem zwischen dem zweiten inneren und dem zweiten äußeren Lagerelement (32, 30) angeordneten zweiten Elastomerkörper (34), wobei das Radiallager (12) und die beiden Axiallager (14, 16) fest vormontiert sind, wobei in axiale Richtung (a) betrachtet jeweils das äußere Lagerelement (24, 30) der beiden Axiallager (14, 16) am Lagerkern (18) des Radiallagers (12) festgelegt ist und die jeweiligen inneren Lagerelemente (26, 32) der beiden Axiallager (14, 16) miteinander in Wirkverbindung stehen wobei der Lagerkern (18) des Radiallagers (12) und die Lagerelemente (24, 26, 30, 32) der beiden Axiallager (14, 16) derart geometrisch zueinander angeordnet sind, dass die Elastomerkörper (28, 34) der Axiallager (14, 16) und der Elastomerkörper (22) des Radiallagers (12) vorgespannt sind,
**dadurch gekennzeichnet, dass** in radiale Richtung betrachtet das Radiallager (12) durch die in Wirkverbindung miteinander stehenden inneren Lagerelemente (26, 32) der beiden Axiallager (14, 16) festgelegt ist.

2. Lager nach Anspruch 1, **dadurch gekennzeichnet, dass** das Radiallager (12) eine den Lagerkern (18) und den Elastomerkörper (22) umgebende Außenschale (20) aufweist.

3. Lager nach einem der Ansprüche 1 bis 2, **dadurch gekennzeichnet, dass** das erste und zweite äußere Lagerelement (24, 30) auf dem Lagerkern (18) axial festgelegt sind und das erste und zweite innere Lagerelement (26, 32) in axiale Richtung (a) betrachtet nebeneinander liegend, über eine gemeinsame Berührungsebene (38) miteinander in Wirkverbindung stehend, angeordnet sind, und das Radiallager (12) durch das erste innere und zweite innere Lagerelement (26, 32) radial festgelegt ist.

4. Lager nach Anspruch 2, **dadurch gekennzeichnet, dass** das erste und zweite äußere Lagerelement (24, 30) auf dem Lagerkern (18) axial festgelegt sind und das erste und zweite innere Lagerelement (26, 32) in axiale Richtung (a) betrachtet nebeneinander liegend, einen Spalt (40) aufweisend, angeordnet sind, und dass die beiden inneren Lagerelemente (26, 32) jeweils einen Positionieranschlag (42, 44) zur axialen Festlegung der Außenschale (20) aufweisen, sodass die beiden inneren Lagerelemente (26, 32) über die Außenschale (20) und die Positionieranschläge (42, 44) in axiale Richtung (a) miteinander in Wirkverbindung stehen und das Radiallager (12) durch die Außenschale (20) sowie das erste innere und zweite innere Lagerelement (26, 32) radial festgelegt ist.

5. Lager nach einem der vorgenannten Ansprüche, **dadurch gekennzeichnet, dass** die Festlegung der Lagerelemente (24, 26, 30, 32) der beiden Axiallager (14, 16) am Lagerkern (18) des Radiallagers (12) kraft- und/oder form- und/oder stoffschlüssig ausgebildet ist.

6. Lager nach einem der vorgenannten Ansprüche, **dadurch gekennzeichnet, dass** zwischen dem Lagerkern (18) und dem Elastomerkörper (22) des Radiallagers (12) eine Gleitfläche (56) ausgebildet ist.

7. Lager nach einem der vorgenannten Ansprüche, **dadurch gekennzeichnet, dass** der Elastomerkörper (22) des Radiallagers (12) und/oder der erste und/oder zweite Elastomerkörper (28, 34) der Axiallager (14, 16) konisch oder rund ausgebildete Funktionsflächen aufweisen.

8. Lager nach einem der vorgenannten Ansprüche, **dadurch gekennzeichnet, dass** in den Elastomerkörper (22) des Radiallagers (12) und/oder in den ersten und/oder den zweiten Elastomerkörper (28, 34) der Axiallager (14, 16) Einlegeteile (52, 54) mit einer im Verhältnis zu den Elastomerkörpern (22, 28, 34) größeren Steifigkeit, insbesondere in Form von Zwischenhülsen/scheiben, eingebracht sind.

9. Lager nach einem der vorgenannten Ansprüche, **dadurch gekennzeichnet, dass** der Elastomerkörper (22) des Radiallagers (12) und/oder der erste und/oder zweite Elastomerkörper (28, 34) der Axiallager (14, 16) partielle Aussparungen aufweisen.

10. Lager nach einem der vorgenannten Ansprüche, **dadurch gekennzeichnet, dass** der Elastomerkörper (22) des Radiallagers (12) zumindest einen in axiale Richtung (a) ausgerichteten Schlitz aufweist.

11. Lager nach einem der vorgenannten Ansprüche, **dadurch gekennzeichnet, dass** der Elastomerkörper (22) des Radiallagers (12) an den Lagerkern (18) anvulkanisiert ist.

12. Lager nach einem der Ansprüche 1 bis 11, **dadurch gekennzeichnet, dass** der Elastomerkörper (22) des Radiallagers (12) auf den Lagerkern (18) aufgeschoben ist.

13. Lager nach einem der Ansprüche 1 bis 11, **dadurch gekennzeichnet, dass** der Elastomerkörper (22) des Radiallagers (12) auf eine auf den Lagerkern (18) des Radiallagers (12) aufschieb/-pressbare Hülse aufvulkanisiert ist.

## Claims

1. Bearing (10) for a wheel suspension of a motor vehicle, comprising
- a radial bearing (12) having a bearing core (18) and an elastomer body (22) surrounding the bearing core (18),
- a first axial bearing (14) having a first inner bearing element (26) and a first outer bearing element (24) and a first elastomer body (28) disposed between the first inner and the first outer bearing element (26, 24), and
- a second axial bearing (16) having a second inner bearing element (32) and a second outer bearing element (30) and a second elastomer body (34) disposed between the second inner and the second outer bearing element (32, 30),
wherein the radial bearing (12) and the two axial bearings (14, 16) are securely premounted, wherein viewed in axial direction (a) respectively the outer bearing element (24, 30) of the two axial bearings (14, 16) is fixed on the bearing core (18) of the radial bearing (12) and the respective inner bearing elements (26, 32) of the two axial bearings (14, 16) are in operative connection with one another,
wherein the bearing core (18) of the radial bearing (12) and the bearing elements (24, 26, 30, 32) of the two axial bearings (14, 16) are disposed geometrically to one another such that the elastomer bodies (28, 34) of the axial bearings (14, 16) and the elastomer bodies (22) of the radial bearing (12) are pretensioned,
**characterised in that** viewed in radial direction the radial bearing (12) is fixed via the inner bearing elements (26, 32) of the two axial bearings (14, 16), being in operative connection with one another.

2. Bearing according to claim 1, **characterised in that** the radial bearing (12) has an outer shell (20) surrounding the bearing core (18) and the elastomer body (22).

3. Bearing according to any of claims 1 to 2, **characterised in that** the first and second outer bearing element (24, 30) are axially fixed on the bearing core (18) and the first and second inner bearing element (26, 32) viewed in axial direction (a) are disposed being next to one another being in operative connection with one another via a shared contact plane (38), and the radial bearing (12) is radially fixed via the first inner and second inner bearing element (26, 32).

4. Bearing according to claim 2, **characterised in that** the first and second outer bearing elements (24, 30) are axially fixed on the bearing core (18) and the first and second inner bearing elements (26, 32) viewed in axial direction (a) are disposed being next to one another, having a gap (40), and that the two inner bearing elements (26, 32) have respectively a positioning stop (42,44) for the axial fixing of the outer shell (20) such that the two inner bearing elements (26, 32) via the outer shell (20) and the positioning stops (42, 44) are in axial direction (a) in operative connection with one another and the radial bearing (12) is radially fixed via the outer shell (20) and the first inner and second inner bearing element (26, 32).

5. Bearing according to any of the preceding claims, **characterised in that** the fixing of the bearing elements (24, 26, 30, 32) of the two axial bearings (14, 16) is formed force-fittingly and/or form-fittingly and/or material-fittingly on the bearing core (18) of the radial bearing (12).

6. Bearing according to any of the preceding claims, **characterised in that** a sliding surface (56) is formed between the bearing core (18) and the elastomer body (22) of the radial bearing (12).

7. Bearing according to any of the preceding claims, **characterised in that** the elastomer body (22) of the radial bearing (12) and/or the first and/or second elastomer body (28, 34) of the axial bearings (14, 16) have conical or round-shaped functional surfaces.

8. Bearing according to any of the preceding claims, **characterised in that** inlay parts (52, 54) having a greater rigidity in relationship to the elastomer bodies (22, 28, 34), in particular in the form of intermediate sleeves/discs, are incorporated into the elastomer body (22) of the radial bearing (12) and/or into the first and/or the second elastomer body (28, 34) of the axial bearings (14, 16).

9. Bearing according to any of the preceding claims, **characterised in that** the elastomer body (22) of the radial bearing (12) and/or the first and/or second elastomer body (28, 34) of the axial bearings (14, 16) have partial recesses.

10. Bearing according to any of the preceding claims, **characterised in that** the elastomer body (22) of the radial bearing (12) has at least one slit oriented in axial direction (a).

11. Bearing according to any of the preceding claims, **characterised in that** the elastomer body (22) of the radial bearing (12) is vulcanised onto the bearing core (18).

12. Bearing according to any of claims 1 to 11, **characterised in that** the elastomer body (22) of the radial bearing (12) is slid onto the bearing core (18).

13. Bearing according to any of claims 1 to 11, **characterised in that** the elastomer body (22) of the radial bearing (12) is vulcanised onto a sleeve which is able to be slid or pressed onto the bearing core (18) of the radial bearing (12).

## Revendications

1. Support (10) pour une suspension de roue d'un véhicule automobile, comprenant
- un support radial (12) avec un noyau de support (18) et un corps élastomère (22) entourant le noyau de support (18),
- un premier support axial (14) avec un premier élément de support intérieur (26) et un premier élément de support extérieur (24) et un premier corps élastomère (28) agencé entre le premier élément de support intérieur et le premier élément de support extérieur (26, 24), ainsi que
- un second support axial (16) avec un second élément de support intérieur (32) et un second élément de support extérieur (30) et un second corps élastomère (34) agencé entre le second élément de support intérieur et le second élément de support extérieur (32, 30),
dans lequel le support radial (12) et les deux supports axiaux (14, 16) sont prémontés fixement, dans lequel considéré dans le sens axial (a) respectivement l'élément de support extérieur (24, 30) des deux supports axiaux (14, 16) est fixé sur le noyau de support (18) du support radial (12) et les éléments de support intérieurs (26, 32) respectifs des deux supports axiaux (14, 16) sont en liaison active l'un avec l'autre,
dans lequel le noyau de support (18) du support radial (12) et les éléments de support (24, 26, 30, 32) des deux supports axiaux (14, 16) sont agencés géométriquement les uns aux autres de telle manière que les corps élastomère (28, 34) des supports axiaux (14, 16) et le corps élastomère (22) du support radial (12) soient précontraints,
**caractérisé en ce que** considéré dans le sens radial le support radial (12) est fixé par les éléments de support intérieurs (26, 32) se trouvant en liaison active l'un avec l'autre des deux supports axiaux (14, 16).

2. Support selon la revendication 1, **caractérisé en ce que** le support radial (12) présente une coque extérieure (20) entourant le noyau de support (18) et le corps élastomère (22).

3. Support selon l'une des revendications 1 à 2, **caractérisé en ce que** le premier et second élément de support extérieur (24, 30) sont fixés axialement sur le noyau de support (18) et le premier et second élément de support intérieur (26, 32) sont agencés considéré dans le sens axial (a) se trouvant l'un près de l'autre, se trouvant en liaison active l'un avec l'autre par le biais d'un plan de contact (38) commun, et le support radial (12) est fixé radialement par le premier élément de support intérieur et second élément de support intérieur (26, 32).

4. Support selon la revendication 2, **caractérisé en ce que** le premier et second élément de support extérieur (24, 30) sont fixés axialement sur le noyau de support (18) et le premier et second élément de support intérieur (26, 32) sont agencés considéré dans le sens axial (a) se trouvant l'un près de l'autre, présentant une fente (40), et que les deux éléments de support intérieurs (26, 32) présentent respectivement une butée de positionnement (42, 44) pour la fixation axiale de la coque extérieure (20) de sorte que les deux éléments de support intérieurs (26, 32) soient en liaison active par le biais de la coque extérieure (20) et les butées de positionnement (42, 44) dans le sens axial (a) l'un avec l'autre et le support radial (12) est fixé radialement par la coque extérieure (20) ainsi que le premier élément de support intérieur et second élément de support intérieur (26, 32).

5. Support selon l'une quelconque des revendications précédentes, **caractérisé en ce que** la fixation des éléments de support (24, 26, 30, 32) des deux supports axiaux (14, 16) est réalisée sur le noyau de support (18) du support radial (12) à force et/ou à complémentarité de formes et/ou par liaison de matière.

6. Support selon l'une quelconque des revendications précédentes, **caractérisé en ce qu'**une surface coulissante (56) est réalisée entre le noyau de support (18) et le corps élastomère (22) du support radial (12).

7. Support selon l'une quelconque des revendications précédentes, **caractérisé en ce que** le corps élastomère (22) du support radial (12) et/ou le premier et/ou second corps élastomère (28, 34) des supports axiaux (14, 16) présentent des surfaces fonctionnelles réalisées de manière conique ou ronde.

8. Support selon l'une quelconque des revendications précédentes, **caractérisé en ce que** des parties d'insertion (52, 54) avec une rigidité plus grande par rapport aux corps élastomère (22, 28, 34), en particulier sous la forme de douilles/disques intermédiaires sont introduites dans le corps élastomère (22) du support radial (12) et/ou dans le premier et/ou le second corps élastomère (28, 34) des supports axiaux (14, 16).

9. Support selon l'une quelconque des revendications précédentes, **caractérisé en ce que** le corps élastomère (22) du support radial (12) et/ou le premier et/ou second corps élastomère (28, 34) des supports axiaux (14, 16) présentent des évidements partiels.

10. Support selon l'une quelconque des revendications précédentes, **caractérisé en ce que** le corps élastomère (22) du support radial (12) présente au moins une fente orientée dans le sens axial (a).

11. Support selon l'une quelconque des revendications précédentes, **caractérisé en ce que** le corps élastomère (22) du support radial (12) est vulcanisé sur le noyau de support (18).

12. Support selon l'une quelconque des revendications 1 à 11, **caractérisé en ce que** le corps élastomère (22) du support radial (12) est enfilé sur le noyau de support (18).

13. Support selon l'une quelconque des revendications 1 à 11, **caractérisé en ce que** le corps élastomère (22) du support radial (12) est vulcanisé sur une douille enfilable ou pressable sur le noyau de support (18) du support radial (12).
